# EUROPÄISCHE PATENTANMELDUNG

(11) **EP 1 435 444 A2**
(43) Veröffentlichungstag der Anmeldung: **07.07.2004**
(21) Anmeldenummer: 03029152.0
(22) Anmeldetag: 18.12.2003
(51) Int. Cl.: F02D 41/02, F01N 11/00

(54) **Verfahren zum emissionsstabilen Betrieb eines Verbrennungsmotors sowie emissionsstabiles Kraftfahrzeug**

(30) Priorität: 31.12.2002 DE 10261678; 24.02.2003 DE 10307723
(71) Anmelder: Volkswagen AG, 38436 Wolfsburg (DE)
(72) Erfinder: Pott, Ekkehard, Dr., 38518 Gifhorn (DE); Zillmer, Michael, Dr., 38173 Sickte (DE); Etzrodt, Thomas, 38553 Wasbüttel (DE); Schmidt, Werner, 29393 Gross-Oesingen (DE)
(74) Vertreter: Pohlmann, Bernd Michael

(57) **Zusammenfassung**

Bei dem erfindungsgemäßen Verfahren zum emissionsstabilen Betrieb eines magerlauffähigen Verbrennungsmotors mit zumindest einer Einrichtung zur Einstellung eines NOx-Rohemissionswertes mit zumindest einem NOx-Speicherkatalysator aufweisenden Abgasreinigungssystem ist vorgesehen, einen Stickoxid-Rohemissionswert in Abhängigkeit von einem Wert eines Katalysatorzustandssignals des NOx-Speicherkatalysators zu wählen.

Zur Einhaltung von vorgegebenen Stickoxid-, Kohlenwasserstoff- und/oder Kohlenmonoxid-Emissionsgrenzwerten wird der Verbrennungsmotor in Abhängigkeit von vorgegebenen Betriebsparametern mit einem Lambda-Wert =1 oder einem Lambda-Wert >1 betrieben. Die vorgegebenen Betriebsparameter umfassen zumindest ein Zustandssignal des NOx-Speicherkatalysators.

Die Erfindung umfasst ferner ein Kraftfahrzeug mit einem magerlauffähigen Verbrennungsmotor und mit einem zumindest einen NOx-Speicherkatalysator aufweisenden Abgasreinigungssystem, dessen Verbrennungsmotor nach dem erfindungsgemäßen Verfahren betrieben werden kann.

## Beschreibung

Die Erfindung betrifft Verfahren zum emissionsstabilen Betrieb eines Verbrennungsmotors und eines Kraftfahrzeuges sowie ein emissionsstabiles Kraftfahrzeug gemäß den Oberbegriffen der unabhängigen Patentansprüche.

Gegenwärtig besteht ein Trend zur wirksamen Senkung des Kraftstoffverbrauches magerlauffähiger Verbrennungsmotoren, insbesondere DI-Ottomotoren, einzusetzen. Dabei tritt bekanntlich ein Zielkonflikt zwischen reduziertem Kraftstoffverbrauch und erhöhten Emissionen, insbesondere von Stickoxiden (NOx), während des sogenannten Schichtbetriebs mit einem Luft-(Lambda-)Wert >1, auf. Mit einem konventionellen 3-Wege-Katalysator können die erhöhten Emissionen nicht in einem akzeptablen Ausmaß reduziert werden, jedoch sind dafür sogenannte NOx-Speicherkatalysatoren geeignet.

Da bei höherer Last und/oder Drehzahl des Motors bei gegebener Auslegung des Schicht-Brennverfahrens sich die Verbrennungsstabilität verschlechtert, ist ein Schichtbetrieb nur bei relativ niedriger Last und Drehzahl möglich. Höhere Drehzahlen und/oder Motorlasten lassen sich jedoch auch in einem homogenen Lambda >1-Zwischenbereich zwischen einem Schichtbetrieb und einem Lambda =1-Betrieb erreichen.

Durch Alterungsprozesse des NOx-Speicherkatalysators kann sich das Emissionsverhalten eines derartigen magerlauffähigen Motors im Magerbereich im Laufe der Zeit verschlechtern. Um eine vorgeschriebene Emissionsstabilität zu gewährleisten, ist es daher aus dem Stand der Technik bekannt, das sogenannte Magerbetriebsfenster, in dem ein derartiger Motor mit einem mageren Gemisch betrieben wird, einzuschränken. So ist beispielsweise aus der DE 19850 786 A 1 ein Verfahren zur Regelung eines NOx-Adsorberkatalysators bekannt, bei dem der Magerbetrieb gesperrt wird, wenn die Katalysatortemperatur kleiner als eine vorbestimmte minimale Grenztemperatur oder größer als eine vorgegebene maximale Grenztemperatur ist, wobei die minimale und maximale Grenztemperatur veränderbare Größen sind. Die minimale Grenztemperatur wird um ein vorgegebenes Temperaturintervall erhöht, falls die Magerintervalldauer oder Regenerationsintervalldauer kleiner als eine vorgegebene minimale untere Magerintervalldauer oder Regenerationsintervalldauer ist. Entsprechend wird die maximale Grenztemperatur erniedrigt. Bei diesem Verfahren wird von der Beobachtung ausgegangen, dass eine Alterung des NOx-Speicherkatalysators sich in einer Verkürzung der Regenerationsintervalldauer widerspiegelt. Analog ist auch bekannt, zur Einhaltung von Emissionsgrenzwerten das Magerbetriebsfenster eines Last-Drehzahlkennfeldes einzuengen. Bei den bekannten Verfahren ist mit dieser Einengung des Magerbetriebs und dem Übergang in einen Lambda =1-Betrieb ein Anstieg des Kraftstoffverbrauches verbunden.

Aufgabe der vorliegenden Erfindung ist es, Verfahren zu schaffen, mit denen eine hohe Emissionsstabilität eines magerlauffähigen Verbrennungsmotors bzw. eines Kraftfahrzeugs bei gleichzeitig verringertem Kraftstoffverbrauch erreicht werden kann. Ein Aspekt der Aufgabe ist die Schaffung eines emissionsstabil betreibbaren Kraftfahrzeuges mit verringertem Kraftstoffverbrauch.

Diese Aufgabe wird erfindungsgemäß durch die Merkmale der unabhängigen Patentansprüche gelöst.

Bei dem erfindungsgemäßen Verfahren zum emissionsstabilen Betrieb eines magerlauffähigen Verbrennungsmotors wird der Verbrennungsmotor zur Einhaltung eines vorgegebenen Stickoxid-, Kohlenwasserstoff- und/oder Kohlenmonoxid-Emissionsgrenzwertes in Abhängigkeit von vorgegebenen Betriebsparametern, die zumindest ein Zustandssignal des NOx-Speicherkatalysators umfassen, temporär mit einem Lambdawert gleich 1 oder einem Lambdawert größer 1 betrieben, wobei ein Sollwert einer Stickoxid-Rohemission in Abhängigkeit von einem Wert des Zustandssignals des NOx-Speicherkatalysators gewählt wird.

Ein Magerbetrieb des Verbrennungsmotors erfolgt vorzugsweise in einem vorgegebenen Magerbetriebsfenster des Kennfeldes unabhängig von dem Wert des Zustandssignals, wobei zur Einhaltung eines vorgegebenen Emissionslevels eine Verringerung der NOx-Rohemission des Verbrennungsmotors vorgesehen ist. Da erfindungsgemäß das Magerbetriebsfenster des Kennfeldes auch bei einem geschädigten Katalysator nicht verkleinert wird, wird ein Übergang in einen Lambda =1-Betriebsmodus mit entsprechenden Verbrauchsnachteilen vermieden, solange der vorgegebene Emissionslevel durch Veränderung der NOx-Rohemission des Verbrennungsmotors eingehalten werden kann.

Auf eine besonders einfache Weise kann die NOx-Rohemission durch Variation einer Abgasrückführrate beeinflusst und damit ein vorgegebener NOx-Emissionslevel eingehalten werden.

Ebenso ist eine Ausführungsform bevorzugt, bei der ein Wert eines Zündzeitpunktes variiert wird, um auf diese Weise die Rohemission des Verbrennungsmotors zu beeinflussen.

Da die NOx-Rohemission sehr empfindlich von dem Wert der Abgasrückführrate abhängt, ist es vorteilhaft, die Abgasrückführrate auf einen vorgegebenen Wert zu regeln. Ferner verändert sich, wie an sich bekannt ist, die Laufunruhe des Verbrennungsmotors in Abhängigkeit von der Abgasrückführrate. Daher ist bei einer bevorzugten Ausführungsform der Erfindung vorgesehen, dass ein Laufunruhesignal ermittelt und der Wert der Abgasrückführrate in Abhängigkeit von diesem Signal geregelt wird. Besonders günstig ist es, einen Laufunruhe-Schwellwert vorzusehen und bei Erreichen dieses Schwellwertes eine Anhebung der Abgasrückführrate zu beenden, da hiermit eine ausreichend hohe Laufstabilität des Verbrennungsmotors einerseits und eine, hohe Abgasrückführrate andererseits erreicht werden kann. Um sicher zu gewährleisten, dass in einem Magerbetrieb ein vorgegebenes NOx-Emissionsniveau nicht überschritten wird, ist es günstig, wenn ein Übergang in einen Betriebsmodi mit einem stöchiometrischen Lambdawert erfolgt, falls ein vorgegebener NOx-Rohemissions-Schwellwert nicht unterschritten wird.

Wenn, wie bei einer weiteren bevorzugten Ausführungsform der Erfindung, ein Magerbetrieb beendet und ein Übergang in einen stöchiometrischen Betriebsmodus erfolgt, falls ein mit einem Anstieg der Abgasrückführrate korrelierender Anstieg eines Kraftstoffverbrauchs einen vorgegebenen Schwellwert überschreitet, ist eine weitere Optimierung des Kraftstoffverbrauchs möglich.

Ferner ist bevorzugt, einen Magerbetrieb zu beenden und einen Übergang in einen stöchiometrischen Betriebsmodus vorzusehen, falls ein mit einer Verstellung des Zündzeitpunkts nach spät korrelierender Anstieg eines Kraftstoffverbrauchs einen vorgegebenen Schwellwert überschreitet.

Die Erfindung umfasst auch ein Kraftfahrzeug mit einem magerlauffähigen Verbrennungsmotor mit zumindest einer Einrichtung zur Einstellung eines NOx-Rohemissionswerts und mit einem zumindest einen NOx-Speicherkatalysator aufweisenden Abgasreinigungssystem, wobei der Verbrennungsmotor zur Einhaltung eines vorgegebenen Stickoxid-, Kohlenwasserstoff- und/oder Kohlenmonoxid-Emissionsgrenzwerts in Abhängigkeit von vorgegebenen Betriebsparametern, die zumindest ein Zustandssignal des NOx-Speicherkatalysators umfassen, temporär mit einem Lambdawert gleich 1 oder einem Lambdawert größer 1 betreibbar ist. Das Zustandssignal wird einer Steuereinheit zugeführt und von dieser ein Sollwert einer Stickoxid-Rohemission in Abhängigkeit von diesem Zustandssignal gewählt.

Besonders bevorzugt ist ein Kraftfahrzeug mit einem magerlauffähigen Verbrennungsmotor und einem nachgeschalteten Abgasreinigungssystem, welches im Neuen Europäischen Fahrzyklus einen gefeuerten Magerbetriebsanteil mit einem Abgaslambda >1,1 von mindestens 250 Sekunden, vorzugsweise mindestens 350 Sekunden, aufweist.

Wenn, wie bei einer weiteren besonders bevorzugten Ausführungsform des Kraftfahrzeugs, bei einem thermisch geschädigten Abgasreinigungssystem eine Maximierung der Magerbetriebsdauer vorgesehen ist, lässt sich eine hohe Emissionsstabilität und ein niedriger Kraftstoffverbrauch miteinander verbinden.

Besonders preisgünstig ist ein Kraftfahrzeug mit einem NOx -Speicherkatalysator, der lediglich die Speicherfähigkeit eines typischen 3-Wege-Katalysators aufweist.

Weitere Ausführungsformen und Vorteile der Erfindung sind den abhängigen Ansprüchen sowie unabhängig von ihrer Zusammenfassung in den Ansprüchen der nachfolgenden Beschreibung und den Zeichnungen zu entnehmen. Die Zeichnungen zeigen in
- Figur 1: einen magerlauffähigen Verbrennungsmotor mit einem Abgasreinigungssystem
- Figur 2: ein Kennfeld mit Drehzahl und Last als Eingangsgrößen für einen direkt einspritzenden Otto-Motor
- Figur 3: ein NOx-Konvertierungsfenster eines NOx-Speicherkatalysators
- Figur 4: das Verhalten von Betriebsparametern eines direkt einspritzenden Otto-Motors in Abhängigkeit von einer Abgasrückführrate
- Figur 5: eine Darstellung der Laufunruhe als Funktion der Abgasrückführrate
- Figur 6: NOx-Emissionen in Abhängigkeit von einem Zündwinkel bei einem direkt einspritzenden Otto-Motor.

Die Erfindung geht von der Idee aus, bei einem verschlechterten Zustand eines NOx-Speicherkatalysators einen NOx-Rohemissionswert eines magerlauffähigen Verbrennungsmotors in Abhängigkeit von einem Zustandssignal des Katalysators zu verringern.

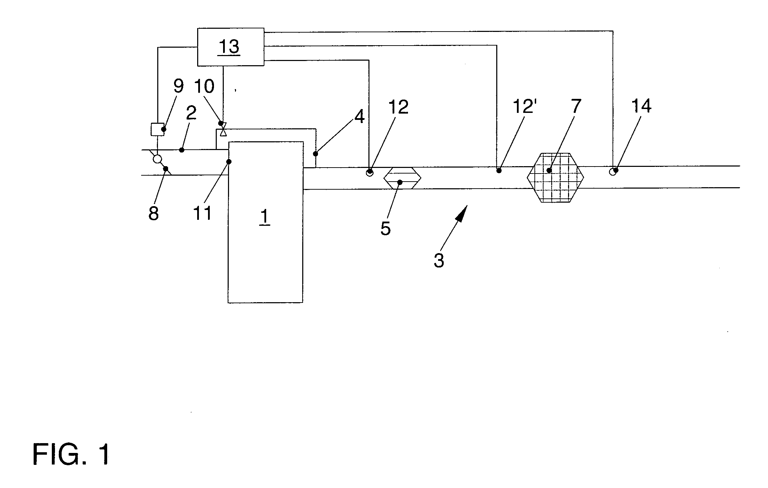

Der in Figur 1 dargestellte magerlauffähige Verbrennungsmotor 1 ist vorzugsweise ein direkt einspritzender insbesondere schichtladefähiger Ottomotor oder ein Dieselmotor und hat einen Lufteinlasskanal 2 und ein Abgasreinigungssystem 3, von der eine Abgasrückführungsleitung 4 zu dem Lufteinlasskanal 2 führt. Mittels der Abgasrückführung kann die NOx-Rohemission reduziert werden. Motornah ist im Abgasreinigungssystem 3 eine Vorkatalysatoreinrichtung 5 angeordnet. Die Entnahme des rückgeführten Abgases kann abweichend von Fig. 1 auch hinter der Vorkatalysatoreinrichtung 5 erfolgen. Stromab der Vorkatalysatoreinrichtung 5 ist ein NOx-Speicherkatalysator 7 angeordnet. Im Lufteinlasskanal 2 ist stromauf der Einmündung der Abgasrückführungsleitung 4 eine Drosselklappe 8 angeordnet, die beispielsweise mittels eines Stellmotors 9 zu öffnen und zu schließen ist. Zur Kontrolle der von der Abgasanlage 3 zu dem Lufteinlass 11 zurückgeführten Abgasmenge ist ein Stellventil 10 in der Abgasrückführungsleitung 4 angeordnet.

Eine Lambdasonde 12 ist im Abgasreinigungssystem 3 stromaufwärts der Vorkatalysatoreinrichtung 5 angeordnet, mit der der Sauerstoffgehalt des Abgases ermittelt werden kann. Eine weitere Lambdasonde 12' kann stromaufwärts des NOx-Speicherkatalysators 7 angeordnet sein. Die Lambdasonden 12, 12' können als Zwei-Punkt- oder als Breitbandsonden ausgeführt sein. Stromab des NOx-Speicherkatalysators 7 ist ein NOx-Sensor 14, ggf. mit einem Ausgang für ein Zwei-Punkt- und/oder ein Breitband-Lambdasignal angeordnet. Die Signale der Lambdasonde 12 und des NOx-Sensors 14 werden einem Steuergerät 13 zugeführt, welches insbesondere den Stellmotor 9 der Lufteinlassdrossel 8 und das Stellventil 10 ansteuert. Ferner erhält das Steuergerät 13 weitere motorrelevante Werte, wie bspw. die Drehzahl N des Motors und sowie den Lastwert.

Die Vorkatalysatoreinrichtung 5 ist vorzugsweise zur Reinigung eines stöchiometrischen Abgases und zur Konvertierung von Kohlenwasserstoffen bei magerem Abgas optimiert ausgelegt. Der NOx-Speicherkatalysator 7 ist in an sich bekannter Weise aufgebaut und weist einen wabenförmigen Träger mit einer als Washcoat ausgebildeten Oberfläche auf und enthält eine Edelmetallbeladung, vorzugsweise Platin, Palladium und/oder Rhodium.

Der Verbrennungsmotor 1 wird derart betrieben, dass eine den vorgeschriebenen Abgasgrenzwerten entsprechende Emission an Schadstoffen, insbesondere Kohlenwasserstoffen (HC), Kohlenmonoxid (CO) und/oder Stickoxid (NOx) nicht überschritten wird. Besonders bevorzugt ist ein Schichtladebetrieb mit einem mageren Gemisch. In Abhängigkeit von der NOx-Beladung des NOx-Speicherkatalysators 7 und unter Umständen noch weiteren Randbedingungen ist eine Regeneration des NOx-Speicherkatalysators mit einem stöchiometrischen bis fetten Abgas erforderlich.

Vorzugsweise wird bei dem Betrieb des Verbrennungsmotors 1 eine Temperatur zumindest von Teilen des NOx-Speicherkatalysators 7 in einem Arbeitsfenster zwischen 250°C und 500°C gewährleistet. In Abhängigkeit von einer mit an sich bekannten Mitteln diagnostizierbaren Schwefelvergiftung kann der NOx-Speicherkatalysator 7 auch auf höhere Temperaturen zur Durchführung einer Desulfatisierung aufgeheizt werden, wenn dies wegen einer durch schwefelhaltigen Kraftstoff verursachten Schwefelvergiftung des NOx-Speicherkatalysators 7 erforderlich sein sollte.

Für die Wirksamkeit der Abgasreinigung ist der Zustand des NOx-Speicherkatalysators von entscheidender Bedeutung. In der Motorsteuerung 13 wird daher in Abhängigkeit von vorgegebenen Betriebsparametern des Verbrennungsmotors 1 ein Zustandssignal des NOx-Speicherkatalysators 7 gebildet. Das Zustandssignal kann in Abhängigkeit von einem NOx-Durchlass des NOx-Speicherkatalysators 7, einer Regenerationszeit, einer charakteristischen NOx-Beladung des Speicherkatalysators 7, einer ermittelten Magerbetriebsdauer zwischen zwei Regenerationen oder dergleichen gebildet werden. Das Zustandssignal kann auch Informationen zur Überwachung der HC- und CO-Reinigungseffizienz des NOx-Speicherkatalysators 7 beinhalten. Bevorzugt wird hierzu die Sauerstoffspeicherfähigkeit des Katalysators ausgewertet, die mittels einer Lambdasonde stromab des Katalysators bestimmt werden kann. Ferner wird der aktuelle Zustand des Abgasreinigungssystems wie an sich bekannt, anhand von Kenngrößen beschrieben. Bevorzugt wird dabei eine obere und untere Temperaturgrenze eines Konvertierungsfensters für NOx- und/oder eine andere Abgaskomponente, eine HC- oder CO-Lightoff-Schwellentemperatur, eine Obergrenze für Rohemission von Abgaskomponenten, eine obere Grenze eines Abgasmassenstroms, eine Obergrenze einer NOx- und/oder SOx-Beladung des Abgasreinigungssystems 3 oder von einem oder mehreren seiner Subsysteme verwendet. Werte dieser Kenngrößen werden in Abhängigkeit von den Betriebsparametern des Verbrennungsmotors 1, ggf. unter Verwendung eines Modells des NOx-Katalysators 7 ermittelt und in einem Datenspeicher des Steuergeräts 13 abgelegt.

Wie an sich bekannt ist, wird der eingangs beschriebene Verbrennungsmotor 1 zweckmäßigerweise betriebspunktabhängig in einem Magerbetriebsfenster eines Kennfeldes betrieben. Die erwähnten Kennwerte können zur Festlegung der Grenzen des Magerbetriebsfensters verwendet werden.

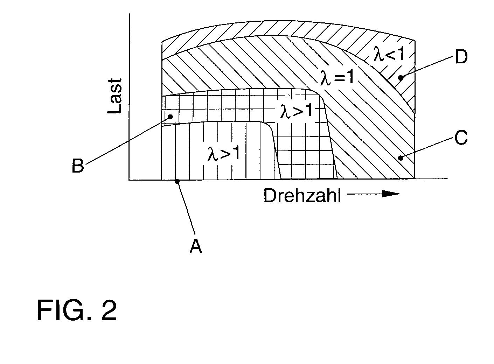

In Figur 2 sind verschiedene mögliche Lambda-Betriebsarten eines Verbrennungsmotors in einem Kennfeld mit den Eingangsgrößen Last und Drehzahl aufgetragen. In dem mit A bezeichneten Bereich ist ein Schichtladebetrieb mit einem Lambda-Wert >1 möglich, bei dem einerseits ein besonders niedriger Kraftstoffverbrauch erreichbar ist, andererseits eine effiziente Abgasreinigung mit einem konventionellen 3-Wege-Katalysator nicht mehr möglich ist. B bezeichnet einen homogenen Magerbetrieb, in dem eine höhere Leistung und eine höhere Drehzahl als im Bereich A und ein geringerer Kraftstoffverbrauch als in dem mit C bezeichneten homogenen Lambda = 1-Bereich möglich ist. Auch in dem Bereich B ist eine effiziente Abgasreinigung mit einem konventionellen 3-Wege-Katalysator im allgemeinen nicht mehr möglich. Bei Volllast kann ein Übergang von dem Bereich C zu einem Bereich D mit einem Lambda-Wert <1 erfolgen. Die in Figur 2 dargestellten Magerbetriebsfenster A bzw. B werden im Stand der Technik eingeschränkt, falls die Effizienz des Abgasreinigungssystems vermindert ist, da andernfalls vorgeschriebene Emissionslevel nicht eingehalten werden können.

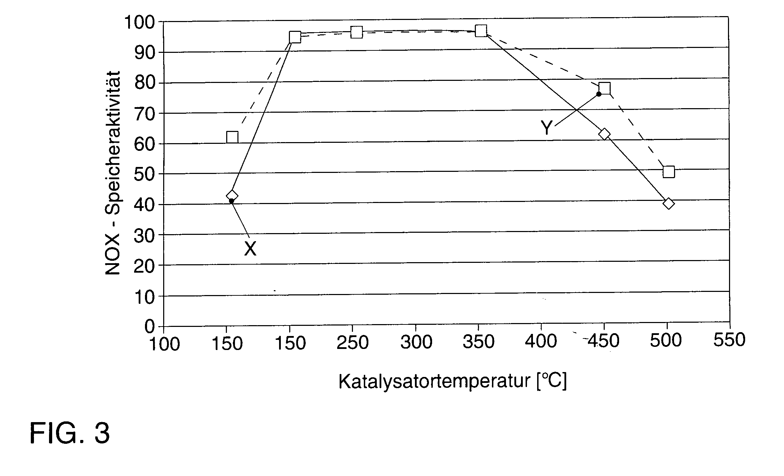

Neben der erwähnten Einschränkung eines Last-Drehzahl-Magerbetriebsfensters ist auch eine Einschränkung eines NOx-Katalysator-Temperaturfensters üblich, falls beispielsweise eine NOx-Konversionsrate unter einen vorgegebenen Wert fällt. Figur 3 veranschaulicht schematisch die Temperaturabhängigkeit einer NOx-Konversionsrate für einen desaktivierten (X) und einen ungeschädigten (Y) NOx-Speicherkatalysator. Es ist erkennbar, dass der ungeschädigte Katalysator (Y) einen zu niedrigen und hohen Werten der NOx-Speicherkatalysator-Temperatur geringeren Abfall der NOx-Konversionsrate zeigt. Neben den erwähnten sind weitere Kennfelder mit zugehörigen Magerbetriebsfenstern gebräuchlich, beispielsweise solche, die die Abhängigkeit einer NOx-Konversionsrate von einem Abgasmassenstrom oder einer Raumgeschwindigkeit darstellen.

Die Erfindung verwendet die Erkenntnis, dass bei einer verringerten NOx-Rohemission auch ein desaktivierter NOx-Speicherkatalysator die Abgase ausreichend reinigen kann, um einen vorgeschriebenen Emissionslevel zu erreichen und daher bei einem Betrieb in einem Magerbetriebsfenster auch der Kraftstoffverbrauch des Verbrennungsmotors bzw. des Kraftfahrzeugs gegenüber einem Lambda =1-Betrieb reduziert werden kann. Erfindungsgemäß wird der Wert der NOx-Rohemission in Abhängigkeit von dem Zustandssignal des NOx-Speicherkatalysators gewählt. Hierzu wird das Zustandssignal einer Steuereinheit zugeführt, die den gewünschten Wert der NOx-Rohemission bestimmt. Bevorzugt wird ein solcher NOx-Rohemissionswert eingestellt, dass für einen vorgegebenen Emissionsgrenzwert an NOx, CO und/oder HC der Kraftstoffverbrauch einen minimalen Wert annimmt. Bevorzugt wird ein Magerbetriebsfenster in einem Kennfeld mit Last und Drehzahl und/oder der NOx-Speicherkatalysator-Temperatur als Eingangsgrößen gewählt. Ferner können komplexere Kennfelder mit weiteren Parametern, wie beispielsweise einem Abgasmassenstrom des Verbrennungsmotors oder einer Raumgeschwindigkeit des Abgases im NOx-Katalysator als Eingangsgrößen des Kennfeldes, verwendet werden.

Die geforderte Reinigungswirkung des Abgasreinigungssytems 3 wird durch gesetzliche Vorschriften für Abgasemissionsgrenzwerte vorgegeben, wobei die Höhe der Grenzwerte während spezieller Fahrzyklen vorgeschrieben ist. In den EU-Ländern wird von dem Neuen Europäischen Fahrzyklus (NEFZ) ein Geschwindigkeitsprofil vorgegeben, das einem typischen Stadt- und Überlandverkehrsaufkommen entsprechen soll. Ein Test entsprechend dem NEFZ hat eine Gesamtdauer von 1180 S, wobei die zurückgelegte Fahrstrecke 11,007 km beträgt. Die gemessenen kumulierten Emissionen während des Fahrzyklus werden auf die Fahrstrecke bezogen.

Die NOx-Grenzwerte gemäß der Emissionsstufe EU 3 und 4 sind wie folgt:

| | NOx[g/km] | |
|---|---|---|
| | Otto | Diesel |
| EU 3 | 0.15 | 0.5 |
| EU 4 | 0.08 | 0.25 |

Bei einer bevorzugten Implementierung der Erfindung wird für ein vorgegebenes Kennfeld mit einem vorgegebenen Magerbetriebsfenster bei einem einen verschlechterten NOx-Speicherkatalysator repräsentierenden Zustandssignal die NOx-Rohemission des Verbrennungsmotors 1 reduziert, statt, wie aus dem Stand der Technik bekannt, eine Adaption von Grenzen des Magerbetriebsfensters vorzunehmen. Beispielsweise kann ein Magerbetriebsfenster wie gemäß der Kurve Y in Figur 3 beibehalten werden, während üblicherweise ein Übergang zu einem eingeschränkten Magerbetriebsfenster gemäß der Kurve X erfolgen würde. Vorzugsweise wird hierbei berücksichtigt, ob der Magerbetrieb mit reduzierter NOx-Rohemission bei den gegebenen Betriebsparametern des Verbrennungsmotors 1 auch zu einem verminderten Kraftstoffverbrauch führt.

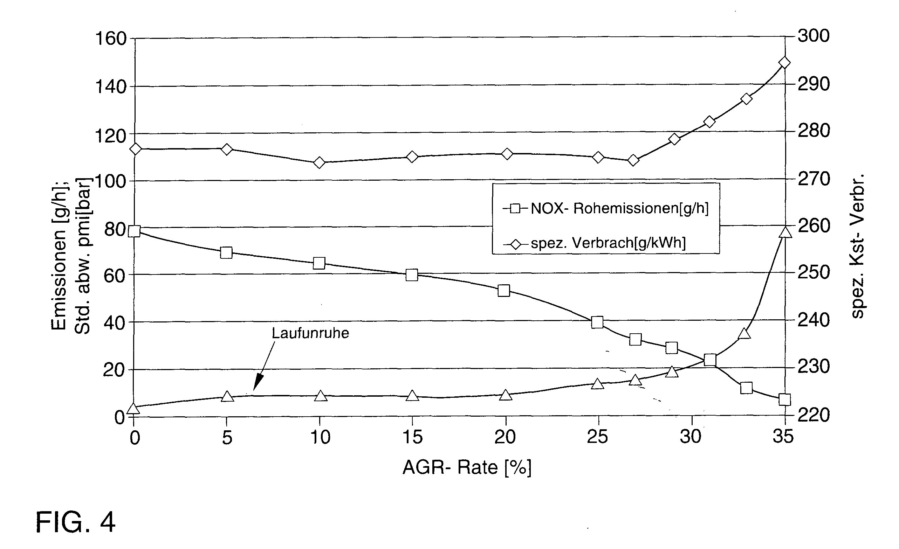

Zur Einstellung der NOx-Rohemission wird der Wert einer Abgasrückführrate variiert. Dies erfolgt bevorzugt in einer Magerbetriebsphase, besonders bevorzugt in einem homogenen Magerbetrieb oder im Schichtladebetrieb. In Figur 4 ist das Verhalten eines Otto-Motors in einem Betriebspunkt mit einer Motordrehzahl von 2.000 min⁻¹ und einem effektiven Mitteldruck von 4 bar in einem homogenen Magerbetrieb dargestellt, wobei ersichtlich ist, dass die NOx-Rohemissionen mit zunehmender Abgasrückführrate abnehmen. Gleichzeitig allerdings wird der spezifische Kraftstoffverbrauch und eine Laufunruhe ab einer bestimmten AGR-Rate zunehmen. Gewünscht ist eine hohe Abgasrückführrate, die betriebspunktabhängig 35 Prozent und größer sein kann, um die NOx-Rohemissionen abzusenken. Ferner kann mit wachsender Abgasrückführrate auch die HC-Rohemission absinken. Der Anstieg der Laufunruhe kommt durch eine nachlassende Verbrennungsqualität aufgrund von verschleppten Verbrennungen und Aussetzern zustande. Wird ein bestimmter Wert der Abgasrückführrate vorgegeben, ist zu berücksichtigen, dass Ungenauigkeiten bei der Ermittlung des angesaugten Frischluftmassenstroms, der eingespritzten Kraftstoffmasse, der gemessenen Abgaszusammensetzung sowie dem Wert der Abgasrückführrate selbst auftreten können. Der Wert der Abgasrückführrate selbst unterliegt einer Ungenauigkeit, da die Position des Ventils, aber nicht der tatsächliche Abgasraten-Massenstrom, erfasst wird. Bei einer vorgegebenen Abgasrückführrate muss daher ein gewisser Sicherheitsabstand zu einem maximal möglichen Wert eingehalten werden, um ein akzeptables Fahrverhalten zu erzielen. Bei einer Abweichung von beispielsweise +/- 5 Prozent der tatsächlichen von der vorgegebenen Abgasrückführrate wird bei einem Wert von 30 Prozent eine Toleranzbreite zwischen 25 und 35 Prozent erzielt. Allerdings ist einerseits bei einer Abgasrückführrate von 25 Prozent die erwünschte NOxund Verbrauchsminderung zu gering und andererseits bei einem Wert von 35 Prozent die Laufunruhe zu hoch. Der erforderliche Sicherheitsabstand führt daher in ungünstigen Fällen zu einer Abgasrückführrate, die wesentlich geringer ist, als dies unter emissions- und verbrauchsoptimierenden Gesichtspunkten angestrebt wird. Bei einer bevorzugten Ausführungsform der Erfindung ist daher die Abgasrückführrate laufunruhe-geregelt. Dazu wird zunächst ein Abgasrückführraten-Kennfeld mit einer Sicherheitsbedatung vorgegeben. In einem zweiten Schritt wird die Laufunruhe des Motors beispielsweise aus einem Drehzahlsignal ermittelt. In einem dritten Schritt wird die ermittelte Laufunruhe mit einem vorgegebenen Schwellwert verglichen. Wird der Schwellwert nicht überschritten, so wird in einem weiteren Schritt die Abgasrückführrate gegenüber dem aus dem Kennfeld vorgegebenen Betrag um einen vorgegebenen Betrag additiv oder multiplikativ angehoben. Wird der Schwellwert überschritten, so wird die Abgasrückführrate gegenüber dem durch das Kennfeld vorgegebenen Wert um einen vorgegebenen Betrag additiv oder multiplikativ abgesenkt. Die Schrittweite bei der Anhebung oder Absenkung kann dabei fest oder variabel in Abhängigkeit von im Motorbetriebspunkt (Drehzahl, Last), der Motorbetriebsart (Schicht/Homogenbetrieb), dem Lambda-Wert, der Abgastemperatur, dem Wert der Abgasrückführrate, Kennwerten des Abgasreinigungssystems der Motortemperatur, dem Umgebungsdruck, der Umgebungstemperatur, einer Stellung eines Nockenwellenstellers und/oder einer Ladungsbewegungsklappe und dergleichen Größen festgelegt werden.

Ebenso kann es sinnvoll sein, die Schrittweite für das Anheben und Absenken unterschiedlich zu wählen; insbesondere, um ein Absenken gegenüber dem Anheben deutlich dynamischer zu gestalten.

Vorteilhaft ist es, die Laufunruhe-Schwelle in Abhängigkeit von den oben genannten Parametern variabel zu halten. Ferner ist denkbar, bei Vorliegen eines nahezu quasi stationären Betriebszustandes mit einer eingeschwungenen Abgasqualität für die Laufunruhe-Schwelle einen anderen Wert vorzusehen als bei Anfahren des gleichen Betriebspunktes im dynamischen Betrieb. Unter Inkaufnahme von Dynamiknachteilen kann auch auf ein vorgegebenes Abgasrückführraten-Kennfeld verzichtet werden, um, ausgehend von einem Null-Wert, die Abgasrückführrate zu erhöhen.

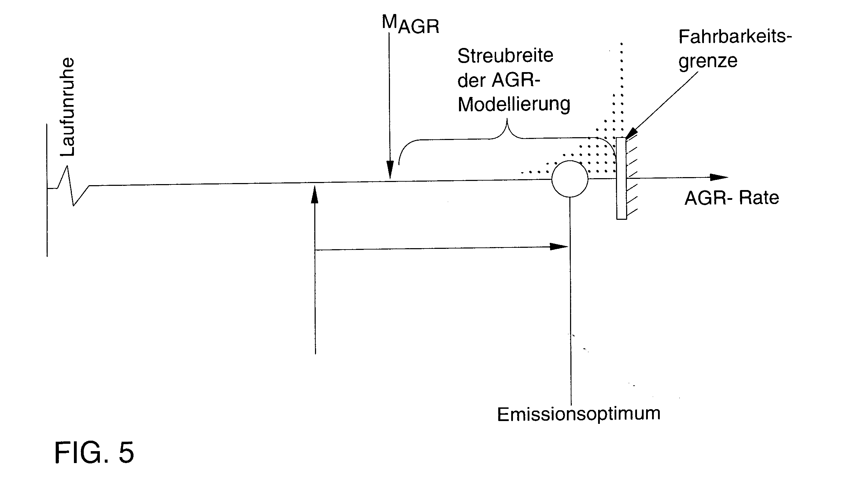

In Figur 5 ist zur Veranschaulichung der vorgeschlagenen Abgasrückführraten-Regelung die Laufunruhe in Abhängigkeit von der Abgasrückführrate dargestellt. Erkennbar ist, dass für Werte der Abgasrückführrate > M_{AGR} die Werte der Laufunruhe ansteigen. Bei geregelter Abgasrückführrate ist es möglich, bis in einen Bereich innerhalb der Streubreite der konventionellen Abgasrückführraten-Modellierung hineinzugehen, in dem ein Emissionsoptimum liegt. In diesem Bereich ist zwar die Laufunruhe erhöht, jedoch besteht noch ein ausreichender Abstand zu einer Fahrbarkeitsgrenze.

Die beschriebene Regelung der Abgasrückführrate kann unter extremen Bedingungen deaktiviert werden, beispielsweise bei großer Höhe, hohen Motor- bzw. Umgebungstemperaturen, Fehlern in abgasbeeinflussenden Bauteilen wie zum Beispiel der Ladungsbewegungsklappe. Ebenso ist eine Deaktivierung sinnvoll auf extrem unebenem Untergrund, wenn keine plausible Laufunruhe-Ermittlung mehr möglich ist.

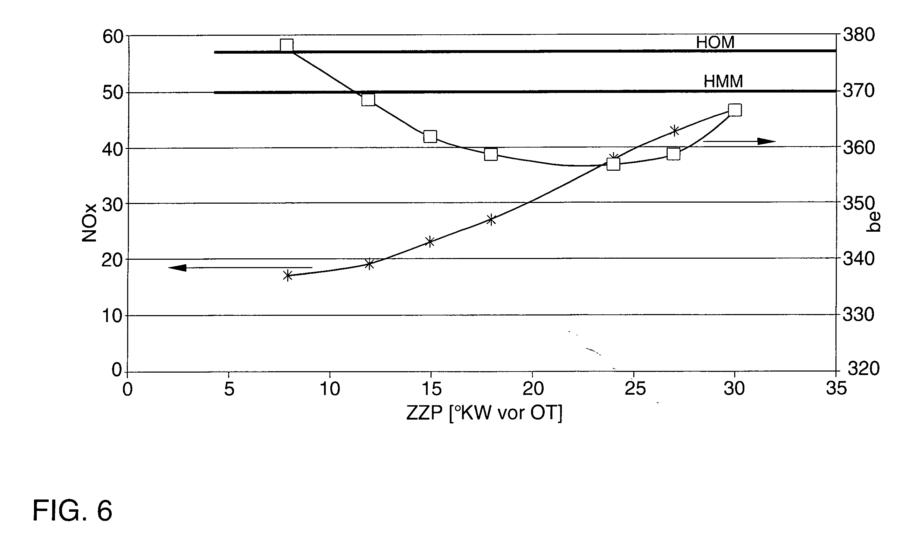

Bei einer weiteren bevorzugten Ausführungsform der Erfindung erfolgt die Einstellung des NOx-Rohemissionswertes zumindest in einer Magerbetriebsphase durch Einstellung eines Zündzeitpunktes. In Figur 6 ist hierzu für einen direkt einspritzenden Otto-Motor in einem Schichtbetrieb die NOx-Rohemission in Abhängigkeit vom Zündzeitpunkt, gemessen in Grad KW vor dem oberen Totpunkt der Kurbelwellenbewegung OT dargestellt. Mit zunehmender Verstellung des Zündzeitpunkts zu kleineren Werten verringert sich die NOx-Rohemission, während nach Erreichen eines Minimums der spezifische Verbrauch ansteigt. Allerdings ist ersichtlich, dass für nicht zu geringe Werte eine Verschiebung des Zündzeitpunkts nach spät der spezifische Verbrauch noch geringer ist als in einem homogenen Magerbetrieb oder einem homogenen stöchiometrischen Betrieb, die in der Figur 6 mit HMM bzw. HOM bezeichnet sind. Es versteht sich, dass zur Anpassung an die Gegebenheiten des jeweiligen Verbrennungsmotors bzw. Kraftfahrzeugs die Einstellung des NOx-Rohemissionswertes über den Zündzeitpunkt nur beispielsweise in einem homogenen Magerbetrieb oder in einem Schichtladebetrieb vorgenommen wird.

Um eine hohe Dynamik zu erreichen ist es zweckmäßig, bei einer Variation der Abgasrückführrate und/oder des Zündzeitpunkts einen korrelierten Anstieg eines Kraftstoffverbrauchs zu ermitteln und für den Fall, dass der Kraftstoffverbrauch einen vorgegebenen Betriebsparameter abhängigen Schwellwert überschreitet, einen Magerbetrieb zu beenden und in einen Lambda =1-Betrieb überzugehen.

Es ist ferner günstig, den Wert der NOx-Rohemission so einzustellen, dass unter Einhaltung eines vorgegebenen Emissionsgrenzwertes eine Magerbetriebsdauer einen maximalen Wert erreicht. Vorzugsweise wird als Emissionsgrenzwert der Grenzwert für NOx gemäß der Emissionsstufe EU 3 oder 4 gewählt. Ebenso kann für ein vorgegebenes Geschwindigkeitsprofil des Kraftfahrzeugs ein zeitlicher Magerbetriebsanteil einen maximalen Wert annehmen. Um Schubabschaltungsphasen und dergleichen auszuschließen, ist es vorteilhaft, wenn hierbei nur ein gefeuerter Magerbetrieb betrachtet wird.

Ein typischer 3-Wege-Katalysator im Frischzustand erzielt, ungebraucht und nach einer Konditionierung von 4 Stunden bei 650 +/- 30 Grad C mittlerer Katalysatortemperatur und einem Lambda-Wert von 1 +/- 0,03 und mit einem zuströmenden Abgas mit bis zu 1,5 %iger Sauerstoffkonzentration bei einer Raumgeschwindigkeit von 20.000 +/- 5.000/h eine HC-, CO- und NOx-Umsatzrate > 90 Prozent, sofern die Konzentrationen an HC < 5.000 ppm, CO < 1 Prozent und NOx < 1.000 ppm im zuströmenden Gas vorliegen und falls die Katalysatortemperatur bei 450 +/- 20 Grad C liegt, bei einer Raumgeschwindigkeit von 60.000 +/- 20.000/h, bei einem mittleren Lambda-Wert von 1,00 +/- 0,01 und einer Toggle-Amplitude von 3 +/- 0,5 Prozent, einer Toggle-Wechselfrequenz von 0,5 bis 3 Hertz. Bei 350 +/- 20 Grad C mittlerer Katalysatortemperatur - unmittelbar nach einer Regenerationsphase von mehr als 60 Sekunden mit einem Abgas mit einem Lambda-Wert < 0,9 - bei einer Raumgeschwindigkeit von 40.000 +/- 20.000/h mit einem Lambda-Wert = 2,2 +/- 0,2, einer HC-Eingangskonzentration < 100 ppm und einer NOx-Eingangskonzentration zwischen 250 und 500 ppm nach Einlagerung einer NO2-Masse von 500 mg/Liter Katalysatorvolumen ist dagegen nur ein NOx-Speicherwirkungsgrad von < 60 Prozent, insbesondere < 50 Prozent, vorzugsweise < 40 Prozent, zu erreichen.

Da durch das erfindungsgemäße Verfahren der Wert der NOx-Rohemission beträchtlich gesenkt werden kann, ist es möglich, den NOx-Speicherkatalysator so auszulegen, dass er im nicht geschädigten Zustand eine NOx-Speicheraktivität eines typischen 3-Wege-Katalysators aufweist. Ferner kann erreicht werden, dass ein derartig ausgerüstetes und betriebenes Kraftfahrzeug mit einem thermisch nicht geschädigten Abgasreinigungssystem im Neuen Europäischen Fahrzyklus einen gefeuerten Magerbetriebsanteil von mindestens 250 Sekunden, vorzugsweise mindestens 350 Sekunden, aufweist. Der Lambda-Wert kann hierbei größer als 1,1 während des gefeuerten Magerbetriebs sein. Bei einer gespeicherten Schwefelmasse von <0,2 g/Liter Katalysatorvolumen kann im Neuen Europäischen Fahrzyklus eine Kohlenwasserstoffemission von 0,07 g/km und eine NOx-Emission von 0,05 g/km unterschritten werden.

Ein derartiges Kraftfahrzeug ist vorzugsweise mit einem NOx-Speicherkatalysator ausgestattet, der im Frischzustand bei 350 +/- 20 Grad C mittlerer Katalysatortemperatur - unmittelbar nach einer Regenerationsphase von mehr als 60 Sekunden mit einem Abgas mit einem Lambda-Wert <0,9 - bei einer Raumgeschwindigkeit von 40.000 +/- 20.000/h bei einem Abgas mit einem Lambda-Wert = 2,2 +/- 0,2, einer HC-Eingangskonzentration < 100 ppm und einer NOx-Eingangskonzentration zwischen 250 und 500 ppm nach Einlagerung einer NO2-Masse von 500 mg/Liter Katalysatorvolumen einen NOx-Speicherwirkungsgrad von mehr als 80 Prozent, insbesondere mehr als 90 und optimal 95 Prozent, aufweist. Es ist zweckmäßig, wenn dieser Speicherkatalysator einer Konditionierung von 4 Stunden bei 650 +/- 30 Grad C mittlerer Katalysatortemperatur und einem Abgas mit einem Lambda-Wert 1 +/- 0,03, einer Sauerstoffkonzentration von bis zu 1,5 Prozent im zuströmenden Gas, welches eine Raumgeschwindigkeit von 20.000 +/- 5.000/h unterzogen wurde. Hiermit ist im Neuen Europäischen Fahrzyklus ein gefeuerter Magerbetriebsanteil mit einem Lambda-Wert >1,1 von mindestens 250, vorzugsweise mindestens 350 Sekunden, erreichbar. Diese Werte sind auch erreichbar, wenn ein Vorkatalysator vorgesehen ist, der einer Ofenalterung für 4 Stunden bei 1100 Grad Celsius in einer Atmosphäre mit 2 % 02 und 10 % H2O ausgesetzt wurde.

Durch die Absenkung der NOx-Rohemissionen ist es auch möglich, die gesetzlichen Schadstoffgrenzen zu gewährleisten, ohne dass eine aktive Regelung der NOx-Regeneration über einen dem NOx-Speicherkatalysator nachgeschalteten NOx-Sensor oder eine Lambda-Sonde erfolgt. Alternativ kann eine zeitgesteuerte Regelung der Regenerationseinleitung und -dauer ohne einen dem Speicherkatalysator nachgeschalteten NOx-Sensor oder eine Lambda-Sonde vorgenommen werden, die gegenüber der herkömmlichen Regelung deutlich kostengünstiger ist. Ferner kann die NOx-Speicherkomponente im Katalysator abgesenkt werden, gegebenenfalls bis auf Null. Der Rhodium-Anteil kann auf einen Wert von < 5g/ft³ < 3g/ft³ oder < 1g/ft³ abgesenkt werden.

### Bezugszeichen

- 1: Verbrennungsmotor
- 2: Lufteinlasskanal
- 3: Abgasreinigungssystem
- 4: Abgasrückführungsleitung
- 5: Vorkatalysatoreinrichtung
- 7: NOx-Speicherkatalysator
- 8: Drosselklappe
- 9: Stellmotor
- 10: Stellventil
- 11: Lambdasonde
- 13: Steuergerät
- 14: NOx-Sensor

## Patentansprüche

1. Verfahren zum emissionsstabilen Betrieb eines magerlauffähigen Verbrennungsmotors mit zumindest einer Einrichtung zur Einstellung eines NOx-Rohemissionswerts und mit einem zumindest einen NOx-Speicherkatalysator aufweisenden Abgasreinigungssystem, wobei der Verbrennungsmotor zur Einhaltung eines vorgegebenen Stickoxid-(NOx-), Kohlenwasserstoff-(HC-) und/oder Kohlenmonoxid-(CO)-Emissionsgrenzwertes in Abhängigkeit von vorgegebenen Betriebsparametern, die zumindest ein Zustandssignal des NOx-Speicherkatalysators umfassen, temporär mit einem Lambdawert gleich 1 oder einem Lambdawert größer 1 betrieben wird, **dadurch gekennzeichnet, dass** ein Sollwert einer NOx-Rohemission in Abhängigkeit von einem Wert des Zustandssignals des NOx-Speicherkatalysators gewählt wird.

2. Verfahren nach Anspruch 1, **dadurch gekennzeichnet, dass** der Sollwert der NOx-Rohemission derart gewählt wird, dass für einen vorgegebenen Emissionsgrenzwert der Kraftstoffverbrauch einen minimalen Wert annimmt.

3. Verfahren nach Anspruch 1 oder 2, **dadurch gekennzeichnet, dass** zumindest in einer Magerbetriebsphase zur Einstellung der NOx-Rohemission eine Abgasrückführrate eingestellt wird.

4. Verfahren nach Anspruch 3, **dadurch gekennzeichnet, dass** dies lediglich in einem homogenen Magerbetrieb vorgesehen ist.

5. Verfahren nach Anspruch 3, **dadurch gekennzeichnet, dass** dies lediglich in einem Schichtladebetrieb vorgesehen ist.

6. Verfahren nach einem der vorhergehenden Ansprüche, **dadurch gekennzeichnet, dass** eine Abgasrückführrate zur Einstellung der NOx-Rohemission auf einen vorgegebenen Wert geregelt wird.

7. Verfahren nach zumindest einem der vorhergehenden Ansprüche, **dadurch gekennzeichnet, dass** der Wert der Abgasrückführrate in Abhängigkeit von vorgegebenen Randbedingungen festgelegt wird.

8. Verfahren nach Anspruch 7, **dadurch gekennzeichnet, dass** ein Laufunruhe-Schwellwert vorgesehen ist und bei Erreichen dieses Schwellwerts eine gegebenenfalls erfolgende Anhebung der Abgasrückführrate beendet wird.

9. Verfahren nach zumindest einem der vorhergehenden Ansprüche, **dadurch gekennzeichnet, dass** zur Einstellung der NOx-Rohemission zumindest in einer Magerbetriebsphase ein Zündzeitpunkt eingestellt wird.

10. Verfahren nach Anspruch 9, **dadurch gekennzeichnet, dass** dies lediglich in einem homogenen Magerbetrieb vorgesehen ist.

11. Verfahren nach Anspruch 9, **dadurch gekennzeichnet, dass** dies lediglich in einem Schichtladebetrieb vorgesehen ist.

12. Verfahren nach zumindest einem der Ansprüche 3 bis 11, **dadurch gekennzeichnet, dass** eine Magerbetriebsphase beendet wird und ein Übergang in eine Lambda=1-Betriebsphase erfolgt, falls ein mit einer Variation der Abgasrückführrate und/oder dem Zündzeitpunkt korrelierter Anstieg eines Kraftstoffverbrauchs einen vorgegebenen betriebsparameter-abhängigen Schwellwert überschreitet.

13. Verfahren nach zumindest einem der vorhergehenden Ansprüche, **dadurch gekennzeichnet, dass** in Abhängigkeit von einem Zustandssignal, welches einem desaktivierten NOx-Speicherkatalysator entspricht, eine Verringerung des Sollwertes der NOx-Rohemission, zumindest in einer Magerbetriebsphase, vorgesehen ist.

14. Verfahren nach Anspruch 13, **dadurch gekennzeichnet, dass** eine Magerbetriebsphase beendet wird und ein Übergang zu einer Lambda=1-Betriebsphase erfolgt, falls der Wert der NOx-Rohemission den Schwellwert nicht unterschreitet.

15. Verfahren nach zumindest einem der Ansprüche 3 bis 14, **dadurch gekennzeichnet, dass** die Einstellung der NOx-Rohemission, ggf. in Abhängigkeit von einer Abgasrückführrate und/oder einem Zündzeitpunkt während einer Magerbetriebsphase so gewählt wird, dass unter Einhaltung des vorgegebenen Emissionsgrenzwertes eine Magerbetriebsdauer einen maximalen Wert erreicht.

16. Verfahren nach Anspruch 15, **dadurch gekennzeichnet, dass** für ein vorgegebenes Geschwindigkeitsprofil des Kraftfahrzeugs ein zeitlicher Magerbetriebsanteil einen maximalen Wert annimmt.

17. Verfahren nach Anspruch 16, **dadurch gekennzeichnet, dass** ein gefeuerter Magerbetrieb vorgesehen ist.

18. Verfahren nach zumindest einem der vorhergehenden Ansprüche, **dadurch gekennzeichnet, dass** der NOx-Speicherkatalysator im nicht geschädigten Zustand eine NOx-Speicheraktivität eines typischen 3-Wege-Katalysators aufweist.

19. Verfahren nach zumindest einem der Ansprüche 15 bis 18, **dadurch gekennzeichnet, dass** das Kraftfahrzeug bei einem nicht geschädigten Abgasreinigungssystem im Neuen Europäischen Fahrzyklus mit einem gefeuerten Magerbetriebsanteil von mindestens 250 Sekunden, vorzugsweise mindestens 350 Sekunden, betrieben wird.

20. Verfahren nach Anspruch 19, **dadurch gekennzeichnet, dass** der Lambda-Wert in dem gefeuerten Magerbetrieb >1,1 ist.

21. Verfahren nach Anspruch 19 oder 20, **dadurch gekennzeichnet, dass** bei einem nicht geschädigten Abgasreinigungssystem im Neuen Europäischen Fahrzyklus und mit einer gespeicherten Schwefelmasse <0,2 g/Liter Katalysatorvolumen eine Kohlenwasserstoffemission von 0,07 g/km und eine NOx-Emission von 0,05 g/km unterschritten wird.

22. Verfahren nach zumindest einem der vorhergehenden Ansprüche, **dadurch gekennzeichnet, dass** ein Magerbetriebsfenster in einem Kennfeld mit vorgegebenen Betriebsparametern als Eingangsgrößen vorgesehen ist.

23. Verfahren nach Anspruch 22, **dadurch gekennzeichnet, dass** in dem Magerbetriebsfenster ein Magerbetrieb stattfindet unabhängig von dem Wert des Zustandssignals.

24. Kraftfahrzeug mit einem magerlauffähigen Verbrennungsmotor mit zumindest einer Einrichtung zur Einstellung eines NOx-Rohemissionswerts und mit einem zumindest einen NOx-Speicherkatalysator aufweisenden Abgasreinigungssystem, wobei der Verbrennungsmotor zur Einhaltung eines vorgegebenen Stickoxid-, Kohlenwasserstoffund/oder Kohlenmonoxid-Emissionsgrenzwerts in Abhängigkeit von vorgegebenen Betriebsparametern, die zumindest ein Zustandssignal des NOx-Speicherkatalysators umfassen, temporär mit einem Lambdawert =1 oder einem Lambdawert >1 betreibbar ist, **dadurch gekennzeichnet, dass** das Zustandssignal einer Steuereinheit zugeführt wird und von dieser ein Sollwert einer NOx-Rohemission in Abhängigkeit von diesem Zustandssignal gewählt wird.

25. Kraftfahrzeug nach Anspruch 24, **dadurch gekennzeichnet, dass** der Sollwert der NOx-Rohemission so gewählt wird, dass für einen vorgegebenen Emissionsgrenzwert der Kraftstoffverbrauch einen minimalen Wert annimmt.

26. Kraftfahrzeug nach zumindest einem der Ansprüche 24 oder 25, **dadurch gekennzeichnet, dass** der Verbrennungsmotor schichtladefähig ist.

27. Kraftfahrzeug nach einem der vorhergehenden Ansprüche 24 bis 26, **dadurch gekennzeichnet, dass** zur Einstellung der NOx-Rohemission eine Einrichtung zur Einstellung einer Abgasrückführrate vorgesehen ist.

28. Kraftfahrzeug nach zumindest einem der Ansprüche 24 bis 27, **dadurch gekennzeichnet, dass** zur Einstellung der NOx-Rohemission eine Einrichtung zur Einstellung eines Zündzeitpunktes des Verbrennungsmotors vorgesehen ist.

29. Kraftfahrzeug nach zumindest einem der Ansprüche 24 bis 28, **dadurch gekennzeichnet, dass** eine Einrichtung zur Ermittlung einer Laufunruhe des Verbrennungsmotors, vorzugsweise in Abhängigkeit von einem Wert der Abgasrückführrate, vorgesehen ist.

30. Kraftfahrzeug nach zumindest einem der Ansprüche 24 bis 29, **dadurch gekennzeichnet, dass** bei einem Betrieb im Neuen Europäischen Fahrzeugzyklus ein gefeuerter Magerbetriebsanteil mit einem Lambda-Wert des Abgases von >1,1 für mindestens 250 Sekunden, vorzugsweise mindestens 350 Sekunden, vorgesehen ist.

31. Kraftfahrzeug nach zumindest einem der Ansprüche 24 bis 30, **dadurch gekennzeichnet, dass** im Neuen Europäischen Fahrzeugzyklus bei einem ungeschädigten Abgasreinigungssystem und mit einer gespeicherten Schwefelmasse <0,2 g/Liter Katalysatorvolumen eine Kohlenwasserstoffemission von 0,07 g/km und eine NOx-Emission von 0,05 g/km unterschreitbar ist.

32. Kraftfahrzeug nach zumindest einem der vorhergehenden Ansprüche 24 bis 31, **dadurch gekennzeichnet, dass** das Abgasreinigungssystem einen Vorkatalysator aufweist.

33. Kraftfahrzeug nach zumindest einem der vorhergehenden Ansprüche 24 bis 32, **dadurch gekennzeichnet, dass** im Neuen Europäischen Fahrzeugzyklus bei einem NOx-Speicherkatalysator, der einer Ofenalterung von 4 Stunden bei 850 Grad Celsius in einer Atmosphäre mit 2 % Sauerstoff und 10 % H2O ausgesetzt war und mit einer gespeicherten Schwefelmasse <0,2 g/Liter Katalysatorvolumen eine Kohlenwasserstoffemission von <0,1 g/km und eine NOx-Emission von <0,08 g/km während zumindest 90 % eines gefeuerten Magerbetriebsanteils erreichbar ist, falls bei einem thermisch nicht geschädigten Abgasreinigungssystem der gefeuerte Magerbetriebsanteil bei einem Lambda-Wert des Abgases >1,1 von mindestens 250 Sekunden, vorzugsweise mindestens 350 Sekunden, erreichbar ist.

34. Kraftfahrzeug nach Anspruch 33, **dadurch gekennzeichnet, dass** ein Vorkatalysator vorgesehen ist, der einer Ofenalterung für 4 Stunden bei 1100 Grad Celsius in einer Atmosphäre mit 2 % O2 und 10 % H2O ausgesetzt wurde.

35. Kraftfahrzeug nach einem der Ansprüche 24 bis 34, **dadurch gekennzeichnet, dass** der NOx-Speicherkatalysator eine NOx-Speicheraktivität eines typischen 3-Wege-Katalysators aufweist.

36. Kraftfahrzeug nach zumindest einem der Ansprüche 24 bis 35, **dadurch gekennzeichnet, dass** der NOx-Speicherkatalysator einen Rhodium-Anteil von < 5g/ft³, vorzugsweise < 3g/ft³ oder < 1g/ft³, aufweist.

37. Kraftfahrzeug mit einem magerlauffähigen Verbrennungsmotor und mit einem zumindest einen Katalysator aufweisenden Abgasreinigungssystem, welches bei einem gefeuerten Magerbetriebsanteil mit einem Lambda-Wert des Abgases >1,1 von mindestens 250 Sekunden, vorzugsweise mindestens 350 Sekunden, im Neuen Europäischen Fahrzeugzyklus und bei ungeschädigtem Abgasreinigungssystem mit einer gespeicherten Schwefelmasse <0,2 g/Liter Katalysatorvolumen, eine Kohlenwasserstoffemission von <0,07 g/km und eine NOx-Emission von 0,05 g/km aufweist, **dadurch gekennzeichnet, dass** der Katalysator im ungebrauchten Zustand
- nach einer Konditionierung von 4 Stunden bei 650 Grad Celsius +/- 30 mittlerer Katalysatortemperatur und einem Abgas mit einem Lambda-Wert =1 +/- 0,03 bei einer Sauerstoffkonzentration <1,5 % im zuströmenden Abgas mit einer Raumgeschwindigkeit von 20.000 +/- 5.000/h,
- bei 350 Grad +/- 20 Grad Celsius mittlerer Katalysatortemperatur,
- unmittelbar nach einer Regenerationsphase von >60 Sekunden und mit einem Lambda-Wert <0,9 bei einer Raumgeschwindigkeit von 40.000 +/- 20.000/h bei einem Lambda-Wert = 2,2 +/- 0,2, einer Kohlenwasserstoffeingangs-Konzentration <100 ppm und einer NOx-Eingangskonzentration von 250 bis 500 ppm nach Einlagerung einer NO2-Masse von 500 mg/Liter Katalysatorvolumen,
- eine NOx-Konversionsrate von < 70 Prozent, < 60 Prozent, insbesondere < 50 Prozent, vorzugsweise < 40 Prozent,
aufweist.
